# EUROPÄISCHE PATENTSCHRIFT

(11) **EP 3 957 524 B1**
(45) Veröffentlichungstag und Bekanntmachung des Hinweises auf die Patenterteilung: **10.09.2025**
(21) Anmeldenummer: 21188169.3
(22) Anmeldetag: 28.07.2021
(51) Int. Cl.: B60S 3/04, B60L 53/30, B66F 9/06, G02B 27/00, B08B 7/02

(54) **INTRALOGISTISCHES SYSTEM MIT AUTONOMEN UND/ODER AUTOMATISIERTEN FAHRZEUGEN UND REINIGUNGSSTATIONEN FÜR SENSOREN DER FAHRZEUGE SOWIE VERFAHREN ZUR STEUERUNG DES SYSTEMS**
INTRALOGISTICS SYSTEM WITH AUTONOMOUS AND / OR AUTOMATED VEHICLES AND CLEANING STATIONS FOR VEHICLE SENSORS AND METHOD FOR CONTROLLING THE SYSTEM
SYSTÈME INTRALOGISTIQUE POURVU DE VÉHICULES AUTONOMES ET/OU AUTOMATISÉS ET STATIONS DE NETTOYAGE POUR CAPTEURS DE VÉHICULE, AINSI QUE PROCÉDÉS DE COMMANDE DU SYSTÈME

(30) Priorität: 17.08.2020 DE 102020121526
(43) Veröffentlichungstag der Anmeldung: 23.02.2022
(73) Patentinhaber: STILL GmbH, 22113 Hamburg (DE)
(72) Erfinder: ERBTS, Patrick, 21244 Buchholz Nordheide (DE)
(74) Vertreter: Patentship Patentanwaltgesellschaft

(56) Entgegenhaltungen:
- WO-A1-2019/086612
- DE-A1- 102016 109 212
- DE-A1- 102018 206 520
- US-A1- 2007 293 978
- US-A1- 2017 121 019
- US-A1- 2018 275 668

## Beschreibung

Die Erfindung betrifft ein intralogistisches System bei dem logistische Material- und Warenflüsse innerhalb eines Betriebsgeländes abgewickelt werden, mit mindestens einem in einer Betriebsumgebung selbsttätig bewegbaren autonomen und/oder automatisierten Fahrzeug mit mindestens einem Sensor zur Umgebungswahrnehmung und Umgebungserkennung, insbesondere zur Umgebungsüberwachung, wobei das intralogistische System mindestens eine vom Fahrzeug getrennte, automatisierte Reinigungsstation umfasst, die über mindestens eine, für eine automatisierte Reinigung des Sensors des Fahrzeugs ausgebildete, Reinigungseinrichtung verfügt.

Außerdem betrifft die Erfindung ein Verfahren zur Steuerung eines intralogistischen Systems.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte zur Lager- und Fördertechnik, Hebezeuge, Flurförderzeuge, autonome und/oder automatisierte Fahrzeuge, beispielsweise automatisierte Flurförderzeuge oder autonome mobile Transportfahrzeuge oder Transportroboter, Kommissioniergeräte, Palettiergeräte, Verpackungsgeräte sowie lagerhallenspezifische Einrichtungen, wie z.B. automatische Tore. Solche Geräte und Einrichtungen bilden die technischen Prozessteilnehmer des intralogistischen Systems.

Zum Transportieren von Lasten werden bei logistischen Prozessen, beispielsweise beim Be- und Entladen von Lastkraftwagen oder beim Warentransport in Produktionsanlagen, in jüngster Zeit häufig fahrerlose automatisierte Flurförderzeuge und/oder fahrerlose autonome Transportfahrzeuge verwendet. Unter fahrerlosen, autonomen bzw. automatisierten Transportfahrzeugen (FTF, englisch: Automated Guided Vehicle, AGV) versteht man flurgebundene Förderfahrzeuge mit eigenem Fahrantrieb, die automatisch gesteuert und berührungslos geführt werden. Die fahrerlosen Flurförderzeuge bzw. Transportfahrzeuge werden mit den Lasten beladen oder nehmen die Lasten selbständig auf. Bei den Lasten handelt es sich meist um mit Waren beladene Paletten. Dabei können die Waren lose oder in Transportbehältnissen, z.B. Gitterboxen, auf den Paletten abgelegt sein.

Beispiele für autonome bzw. automatisierte Flurförderzeuge sind so genannte autonome bzw. automatisierte Unterflurfahrzeuge. Dabei handelt es sich um automatisierte, flache Fahrzeuge mit einer Lastplattform, welche zum Transport einer Last auf dem Fahrzeug dient.

Fahrerlose Transportfahrzeuge dienen dem Materialtransport, und zwar zum Ziehen oder Tragen von Fördergut mit aktiven oder passiven Lastaufnahmemitteln. Auch mobile Kommissionierroboter weisen in der Regel flach ausgeführte Plattformen zum Tragen von robotischen Einrichtungen (z.B. Roboterarmen) auf.

Solche autonomen bzw. automatisierten Flurförderzeuge sind in der Regel ohne einen dezidierten Fahrerarbeitsplatz ausgeführt. Daher ermöglichen Fahrzeuge dieser Art die Realisierung von flachen Fahrzeugstrukturen mit kompakt verbauten Komponenten und Aggregaten.

Automatisierte bzw. autonome Fahrzeuge, die zum innerbetrieblichen Transport von Waren und Gütern jeglicher Art eingesetzt werden, sind mit sensibler Sensorik zum Navigieren, Lokalisieren und zum Wahrnehmen von Objekten oder Markern ausgestattet. Häufig sind dies Laser-Sicherheitsscanner, um die Umgebung zu wahrzunehmen und zu erkennen und die Sicherheit zu gewährleisten. In Fahrzeugen mit zunehmendem Automatisierungsgrad bis hin zu komplett autonomen Transportfahrzeugen oder autonomen Transportrobotern wird weitere empfindliche Sensortechnik benötigt, um die Umgebung, beispielsweise ein Warenlager oder eine Produktionshalle, wahrzunehmen.

Die Sensoren dienen dem Fahrzeug im weitesten Sinne als Sehnerv, um Objekte zu erkennen und zu klassifizieren. Die Verarbeitung der Daten aus den Sensoren erfolgt durch Algorithmen, die basierend auf den Datenströmen der Sensoren das Handeln der Fahrzeuge bestimmen. Typische Sensoren sind Laser-basierte Sensoren, bildgebende Sensoren, beispielsweise 2D- oder 3D- Kameras, oder Ultraschallsensoren, beispielsweise in 2D- oder 3D-Technik.

Für den bestmöglichen Einsatz autonomer bzw. automatisierter Fahrzeuge muss das Sichtfeld der Sensoren möglichst frei von Schmutz, Staub oder anderen Partikeln sein. Ist ein Sensor derart stark verschmutzt, dass er nicht mehr die benötigte Qualität an Daten liefern kann, ist eine Reinigung des Sichtfeldes des Sensors unbedingt erforderlich, um die Sicherheit zu gewährleisten. Dies wird bislang häufig manuell durchgeführt und führt damit zu unerwünschten hohen Wartungskosten und Standzeiten der Fahrzeuge.

Autonome bzw. automatisierte Fahrzeuge haben das Ziel, möglichst ohne manuelle Eingriffe zugewiesene Aufgaben zu erledigen. Eine durch Menschen notwendige Reinigung der Sensoren steht dem aber entgegen.

Aus der US 2018/0275668 A1 ist ein gattungsgemäßes intralogistisches System mit den Merkmalen des Oberbegriffs des Patentanspruchs 1 bekannt.

Der vorliegenden Erfindung liegt die Aufgabe zugrunde, ein intralogistisches System der eingangs genannten Art sowie eine Reinigungsstation eines intralogistischen Systems und ein Verfahren zur Steuerung eines intralogistischen Systems so auszugestalten, dass der manuelle Aufwand der Wartung solcher Systeme verringert wird.

Diese Aufgabe wird beim intralogistischen System erfindungsgemäß dadurch gelöst, dass die Reinigungsstation über mindestens eine selbsttätig bewegbare, mobile Reinigungseinheit verfügt, die an das Fahrzeug selbsttätig annäherbar ist, wobei die mobile Reinigungseinheit als autonomes oder automatisiertes Reinigungsfahrzeug ausgebildet ist.

Die Reinigung des Sensors erfolgt also nicht durch Einrichtungen, die am Fahrzeug selbst verbaut sind, sondern durch eine separate Reinigungsstation. Auf diese Weise kann auf einen zusätzlichen Platzbedarf an oder in dem Fahrzeug verzichtet werden, wodurch die gewünschte Kompaktheit des Fahrzeugs gewährleistet werden kann. Die automatisierte, externe Reinigungsstation sorgt für eine zuverlässige Reinigung des Sensors, so dass eine sichere Manövrierbarkeit des Fahrzeugs langfristig gegeben ist.

Gemäß der Erfindung verfügt die Reinigungsstation über mindestens eine selbsttätig bewegbare, mobile Reinigungseinheit, die an das Fahrzeug selbsttätig annäherbar ist. Das Fahrzeug muss also nicht an die Reinigungsstation, beispielsweise eine stationäre Reinigungsstation, heranfahren, sondern die mobile Reinigungseinheit der Reinigungsstation bewegt sich zum Fahrzeug.

Gemäß der Erfindung ist die mobile Reinigungseinheit als autonomes oder automatisiertes Reinigungsfahrzeug ausgebildet, die vom autonomen bzw. automatisierten Fahrzeug angefordert werden kann, um das kontaminierte Sichtfeld des Sensors direkt vor Ort zu reinigen.

Um eine bedarfsgerechte Reinigung des Sensors zu gewährleisten, verfügt das Fahrzeug vorteilhafterweise über eine Überwachungseinrichtung, die für eine Überwachung des Sensors des Fahrzeugs auf Verschmutzungen im Sensor-Sichtfeld ausgebildet ist, wobei die Überwachungseinrichtung eine elektronische Steuerungseinrichtung umfasst, die dazu eingerichtet ist, bei einer Überschreitung eines vorgegebenen Verschmutzungsgrads einen automatisierten Reinigungsvorgang des Sensors einzuleiten.

Zweckmäßigerweise umfasst die Reinigungseinrichtung mindestens eine, vorzugsweise rotierbare, Reinigungsbürste. Dabei ist die Reinigungsbürste mit Vorteil aus der Reinigungsstation ausfahrbar. Somit kann die Reinigungsbürste an den Sensor herangefahren werden und der Schmutz durch Kontakt mit der rotierenden Reinigungsbürste entfernt werden. Man kann sich die Funktion wie bei einer rotierenden Schuhputzbürste vorstellen. Dabei kann die Ausrichtung der Rotationsachse einer rotierenden Reinigungsbürste horizontal oder vertikal sein. Durch das Ausfahren der Reinigungsbürste aus der Reinigungsstation wird es ermöglicht, den Sensor in seiner Gesamtheit zu reinigen.

Eine weitere mögliche Ausgestaltung sieht vor, dass die Reinigungseinrichtung der Reinigungsstation mindestens eine Reinigungsdüse umfasst, mit der ein flüssiges oder gasförmiges Medium auf den Sensor des Fahrzeugs sprühbar ist. Beispielsweise kann als Medium Druckluft oder unter Druck stehendes Wasser aus der Reinigungsdüse auf das Sichtfeld des Sensors gesprüht werden, um die Verschmutzungen zu entfernen.

Dabei ist die Reinigungsdüse vorzugsweise aus der Reinigungsstation ausfahrbar. Auch eine schwenkbare und/oder drehbare Ausführung der Reinigungsdüse ist von Vorteil. Hierzu kann die Reinigungsdüse beispielsweise mittels eines Roboterarms geführt werden. Dadurch können auch schwer zu erreichende Sensorpositionen gereinigt werden.

Eine weitere bevorzugte Ausgestaltung der Erfindung sieht vor, dass die Reinigungseinrichtung der Reinigungsstation translatorisch zu bewegende Reinigungstücher und/oder Reinigungsschwämme und/oder Reinigungsgummilippen umfasst. Durch die translatorische Bewegung kann die Verschmutzung des Sichtfeldes des Sensors beseitigt werden. Ähnlich wie bei der Reinigungsdüse kann auch hierfür ein einfacher Roboterarm genutzt werden.

In einer anderen, vorteilhaften Ausführungsform umfasst die Reinigungseinrichtung der Reinigungsstation mindestens einen hochfrequenten Schwingungserzeuger. Zweckmäßigerweise verfügt der Schwingungserzeuger über eine Vibrationsplatte, auf die das Fahrzeug auffahrbar ist. Durch die erzeugten Vibrationen löst sich der Schmutz vom Sichtfeld des Sensors.

Gemäß einer bevorzugten Weiterbildung des Erfindungsgedankens verfügt die Reinigungsstation über eine Kalibrierungseinrichtung, die zur automatisierten Kalibrierung des Sensors des Fahrzeugs ausgebildet ist. Somit kann eine Miss-Kalibrierung des Sensors automatisiert behoben werden.

Außerdem betrifft die Erfindung ein Verfahren zur Steuerung eines intralogistischen Systems.

Verfahrensseitig wird die gestellte Aufgabe dadurch gelöst, dass der Sensor des Fahrzeugs auf Verschmutzungen im Sensor-Sichtfeld überwacht wird und bei Überschreitung eines vorgegebenen Verschmutzungsgrads ein automatisierter Reinigungsvorgang eingeleitet wird.

Vorzugsweise werden zur Überwachung der Verschmutzungen des Sensors die Sensorsignale ausgewertet und es wird die Überschreitung des vorgegebenen Verschmutzungsgrads durch eine Abnahme der Signalstärke unter ein vorgegebenes Qualitätsniveau festgestellt.

Sofern die Reinigungsstation über eine selbsttätig bewegbare, mobile Reinigungseinheit verfügt, kann auch ein Befehl zur Annäherung der Reinigungseinheit an das Fahrzeug erfolgen.

Die Erfindung bietet eine ganze Reihe von Vorteilen:
Die Erfindung ermöglicht geringere Wartungskosten für autonome oder bzw. automatisierte Fahrzeuge, insbesondere autonome oder bzw. automatisierte mobile Transportfahrzeuge oder Transportroboter, da eine Reinigung der Sensoren automatisiert erfolgt. Weniger manueller Wartungsaufwand bedeutet ebenfalls weniger Personalaufwand und somit geringere Kosten. Durch eine Integration der Reinigungsstation in eine elektrische Ladestation zum Laden einer Batterie des Fahrzeugs wird ein Laden der Batterie und eine Reinigung des Sensors in einem Schritt ermöglicht, wodurch sich geringere Stillstandzeiten für die eingesetzten autonomen bzw. automatisierten Fahrzeuge durch zeitlich paralleles Laden der Batterie und Reinigen der Sensoren (prozessintegriertes Reinigen der Sensoren) ergeben. Außerdem wird die Sicherheit für den Einsatz autonomer bzw. automatisierter Fahrzeuge, insbesondere von autonomen oder automatisierten mobilen Transportfahrzeugen oder Transportrobotern, in der Intralogistik verbessert, da die Sensoren verlässlichere Daten liefern und frühzeitig gereinigt werden.

Weitere Vorteile und Einzelheiten der Erfindung werden anhand der in den schematischen Figuren dargestellten Ausführungsbeispiele näher erläutert. Hierbei zeigen
- Figur 1: eine Draufsicht auf ein autonomes bzw. automatisiertes Fahrzeug an einer Reinigungsstation mit einer Reinigungsbürste,
- Figur 2: eine Draufsicht auf ein autonomes bzw. automatisiertes Fahrzeug an einer Reinigungsstation mit einer Reinigungsdüse, und
- Figur 3: eine Draufsicht auf ein autonomes bzw. automatisiertes Fahrzeug an einer Reinigungsstation mit einer Vibrationsplatte.

In den verschiedenen Figuren sind dieselben Merkmale mit denselben Bezugsziffern bezeichnet.

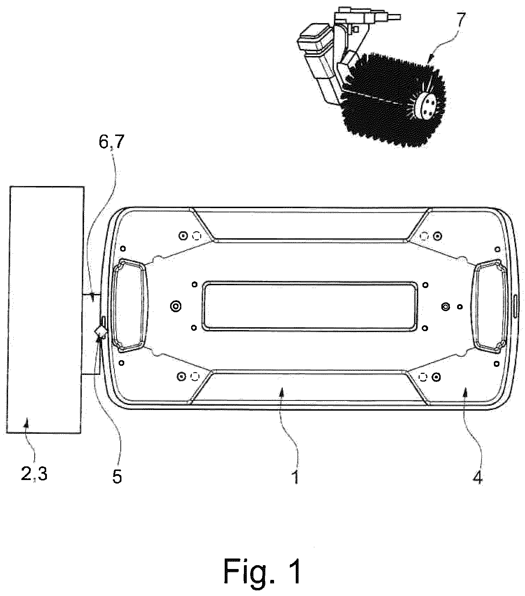

In der Figur 1 ist ein batterie-elektrisch betriebenes autonomes bzw. automatisiertes Fahrzeug 1 in einer Draufsicht gezeigt. Das Fahrzeug 1 ist beispielsweise als flaches Transportfahrzeug ausgebildet. Auf dem Fahrzeug 1 ist eine Transportplattform 4 für die Aufnahme von zu transportierenden Gütern angeordnet. Das Fahrzeug 1 ist an einer elektrischen Ladestation 2 zum Laden der Batterie des Fahrzeugs 1 angedockt. Zur Umgebungswahrnehmung und Umgebungserkennung verfügt das Fahrzeug 1 über mindestens einen Sensor 5. Der Sensor 5 ist in der Figur 1 beispielsweise im mittleren Bereich der Stirnseite des Fahrzeugs 1 angeordnet. Der Sensor 5 kann weiterhin zur Umgebungsüberwachung dienen.

Es ist eine vom Fahrzeug 1 getrennte, automatisierte Reinigungsstation 3 vorgesehen, die über mindestens eine, für eine Reinigung des Sensors 5 des Fahrzeugs 1 ausgebildete, Reinigungseinrichtung 6 verfügt.

Das Reinigen des Sensors 5 und das Laden der Batterie des Fahrzeugs 1 soll bevorzugt in einem Schritt durchgeführt werden. Hierzu ist in die Ladestation 2 die Reinigungsstation 3 mit der Reinigungseinrichtung 6 integriert.

Der Verschmutzungsgrad des Sensors 5 wird beispielsweise durch intelligente Software einer, in der Figur 1 nicht dargestellten, Steuerungseinrichtung des Fahrzeugs 1 überwacht.

Nimmt beispielsweise die Qualität des Datenstroms des Sensors 5 ab, wird automatisiert ein Reinigungsprotokoll des Sensors 5 eingeleitet, was zu einer außerplanmäßigen Reinigung des Sensors 5 führt. Das autonome bzw. automatisierte Fahrzeug 1 erhält dann frühzeitig von der Steuerungseinrichtung den Befehl, die Reinigungsstation 3 anzufahren.

Der Reinigungsprozess, mit dem Ziel Dreck, Staub und andere Schmutzpartikel von dem Sichtfeld des Sensors 5 zu entfernen, kann - abhängig von Fahrzeuggröße und Position des Sensors 5 - auf unterschiedliche Arten durchgeführt werden.

In der Figur 1 ist eine Variante gezeigt, bei der die Reinigungsstation 3 über eine Reinigungseinrichtung 6 verfügt, welche mindestens eine rotierende Reinigungsbürste 7 umfasst.

Die Reinigungsbürste 7 ist zur Veranschaulichung im oberen Teil der Figur 1 im Detail dargestellt.

Die Reinigungsbürste 7 wird an den Sensor 5 herangefahren und durch Kontakt mit der rotierenden Reinigungsbürste 7 wird der Schmutz entfernt. Dabei kann die Ausrichtung der Rotationsachse der Reinigungsbürste 7 horizontal oder vertikal sein. Ein Ausfahren der Reinigungsbürste 7 aus der Reinigungsstation 3 ermöglicht es, den Sensor 5 in seiner Gesamtheit zu reinigen.

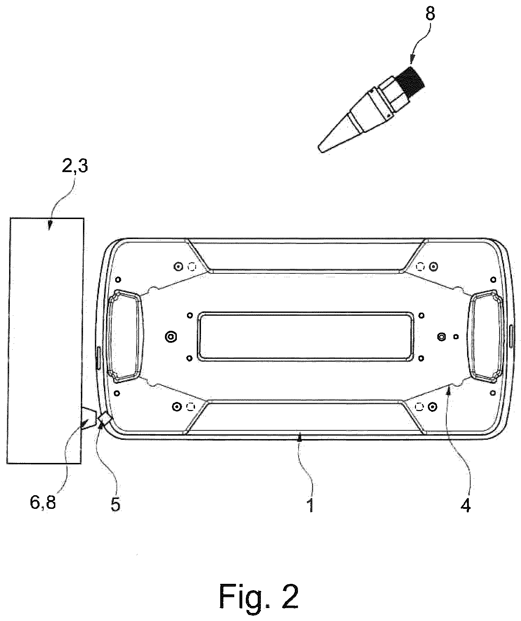

Die Figur 2 zeigt ebenfalls ein autonomes bzw. automatisiertes Fahrzeug 1. Bei dem in der Figur 2 dargestellten Fahrzeug 1 befindet sich der Sensor 5 beispielsweise an einer Eckposition der Stirnfläche des Fahrzeugs 1. Bei dieser Variante ist eine in die Ladestation 2 integrierte Reinigungsstation 3 vorgesehen, die über eine Reinigungseinrichtung 6 verfügt, welche eine Reinigungsdüse 8 umfasst.

Aus der Reinigungsdüse 8 wird ein Medium, insbesondere Druckluft oder unter Druck stehendes Wasser, auf das Sichtfeld des Sensors 5 gesprüht und der Staub dadurch entfernt. Dies kann durch eine in die Reinigungsstation 3 eingebaute Reinigungsdüse 8, durch eine aus der Reinigungsstation 3 ausfahrbare Reinigungsdüse 8 oder auch durch eine, beispielsweise mittels eines Roboterarms, schwenkbare und/oder drehbare Reinigungsdüse 8 realisiert werden. Dadurch können auch schwer zu erreichende Sensorpositionen gereinigt werden.

Die Reinigungsdüse 8 ist zur Veranschaulichung im oberen Teil der Figur 2 im Detail dargestellt.

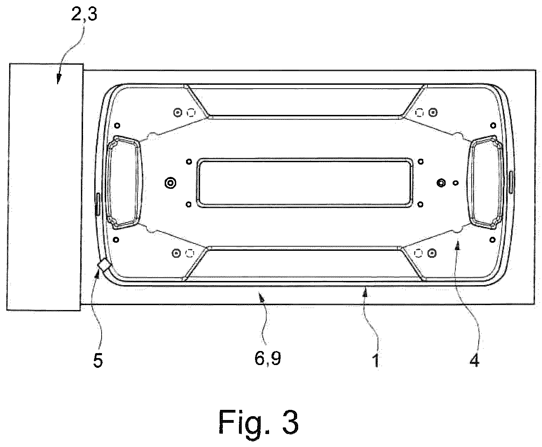

Die Figur 3 zeigt eine weitere Variante, bei der die in die Ladestation 2 integrierte Reinigungsstation 3 über eine Reinigungseinrichtung 6 verfügt, die eine Vibrationsplatte 9 umfasst. Die Vibrationsplatte 9 befindet sich vor der Ladestation 2 und somit vor der Reinigungsstation 3 auf dem Boden. Das Fahrzeug 1 ist auf die Vibrationsplatte 9 gefahren. Die Reinigungsstation 3 verfügt über einen Schwingungserzeuger, der hochfrequente Schwingungen erzeugt und die Vibrationsplatte 9 und somit das auf der Vibrationsplatte 9 stehende Fahrzeug 1 zu Vibrationen anregt, wodurch sich der Schmutz vom Sichtfeld des Sensor 5 des Fahrzeugs 1 löst.

## Patentansprüche

1. Intralogistisches System, bei dem logistische Material- und Warenflüsse innerhalb eines Betriebsgeländes abgewickelt werden, mit mindestens einem in einer Betriebsumgebung selbsttätig bewegbaren autonomen und/oder automatisierten Fahrzeug (1) mit mindestens einem Sensor (5) zur Umgebungswahrnehmung und Umgebungserkennung, insbesondere zur Umgebungsüberwachung, wobei das intralogistische System mindestens eine vom Fahrzeug (1) getrennte, automatisierte Reinigungsstation (3) umfasst, die über mindestens eine, für eine automatisierte Reinigung des Sensors (5) des Fahrzeugs (1) ausgebildete, Reinigungseinrichtung (6) verfügt, **dadurch gekennzeichnet, dass** die Reinigungsstation (3) über mindestens eine selbsttätig bewegbare, mobile Reinigungseinheit verfügt, die an das Fahrzeug (1) selbsttätig annäherbar ist, wobei die mobile Reinigungseinheit als autonomes oder automatisiertes Reinigungsfahrzeug ausgebildet ist.

2. Intralogistisches System nach Anspruch 1, **dadurch gekennzeichnet, dass** das Fahrzeug (1) über eine Überwachungseinrichtung verfügt, die für eine Überwachung des Sensors (5) des Fahrzeugs (1) auf Verschmutzungen im Sensor-Sichtfeld ausgebildet ist, wobei die Überwachungseinrichtung eine elektronische Steuerungseinrichtung umfasst, die dazu eingerichtet ist, bei einer Überschreitung eines vorgegebenen Verschmutzungsgrads einen automatisierten Reinigungsvorgang des Sensors (5) einzuleiten.

3. Intralogistisches System nach Anspruch 1 oder 2, **dadurch gekennzeichnet, dass** die Reinigungseinrichtung (6) mindestens eine Reinigungsbürste (7) umfasst.

4. Intralogistisches System nach Anspruch 3, **dadurch gekennzeichnet, dass** die Reinigungsbürste (7) aus der Reinigungsstation (3) ausfahrbar ist.

5. Intralogistisches System nach einem der Ansprüche 1 bis 4, **dadurch gekennzeichnet, dass** die Reinigungseinrichtung (6) der Reinigungsstation (3) mindestens eine Reinigungsdüse (8) umfasst, mit der ein flüssiges oder gasförmiges Medium auf den Sensor (5) des Fahrzeugs (1) sprühbar ist.

6. Intralogistisches System nach Anspruch 5, **dadurch gekennzeichnet, dass** die Reinigungsdüse (8) aus der Reinigungsstation (3) ausfahrbar ist.

7. Intralogistisches System nach Anspruch 5 oder 6, **dadurch gekennzeichnet, dass** die Reinigungsdüse (8) schwenkbar und/oder drehbar ist.

8. Intralogistisches System nach einem der Ansprüche 1 bis 7, **dadurch gekennzeichnet, dass** die Reinigungseinrichtung (6) der Reinigungsstation (3) translatorisch zu bewegende Reinigungstücher und/oder Reinigungsschwämme und/oder Reinigungsgummilippen umfasst.

9. Intralogistisches System nach einem der Ansprüche 1 bis 8, **dadurch gekennzeichnet, dass** die Reinigungseinrichtung (6) der Reinigungsstation (3) mindestens einen hochfrequenten Schwingungserzeuger umfasst.

10. Intralogistisches System nach Anspruch 9, **dadurch gekennzeichnet, dass** der Schwingungserzeuger über eine Vibrationsplatte (9) verfügt, auf die das Fahrzeug (1) auffahrbar ist.

11. Intralogistisches System nach einem der Ansprüche 1 bis 10, **dadurch gekennzeichnet, dass** die Reinigungsstation (3) über eine Kalibrierungseinrichtung verfügt, die zur automatisierten Kalibrierung des Sensors (5) des Fahrzeugs (1) ausgebildet ist.

12. Verfahren zur Steuerung eines intralogistischen Systems nach einem der Ansprüche 1 bis 11, **dadurch gekennzeichnet, dass** der Sensor (5) des Fahrzeugs (1) auf Verschmutzungen im Sensor-Sichtfeld überwacht wird und bei Überschreitung eines vorgegebenen Verschmutzungsgrads ein automatisierter Reinigungsvorgang eingeleitet wird.

13. Verfahren nach Anspruch 12, **dadurch gekennzeichnet, dass** zur Überwachung der Verschmutzungen des Sensors (5) die Sensorsignale ausgewertet werden und die Überschreitung des vorgegebenen Verschmutzungsgrads durch eine Abnahme der Signalstärke unter ein vorgegebenes Qualitätsniveau festgestellt wird.

## Claims

1. Intralogistics system, in which logistical flows of material and goods are handled within operating premises, having at least one autonomous and/or automated vehicle (1) which can be automatically moved in an operating environment and has at least one sensor (5) for environmental perception and environmental detection, in particular for environmental monitoring, wherein the intralogistics system comprises at least one automated cleaning station (3) which is separate from the vehicle (1) and has at least one cleaning device (6) which is designed for automated cleaning of the sensor (5) of the vehicle (1), **characterized in that** the cleaning station (3) has at least one automatically movable, mobile cleaning unit which can automatically move closer to the vehicle (1), wherein the mobile cleaning unit is designed as an autonomous or automated cleaning vehicle.

2. Intralogistics system according to Claim 1, **characterized in that** the vehicle (1) has a monitoring device which is designed for monitoring the sensor (5) of the vehicle (1) for contaminants in the sensor field of view, wherein the monitoring device comprises an electronic control device which is designed to initiate an automated cleaning process of the sensor (5) in the event of a specified degree of contamination being exceeded.

3. Intralogistics system according to Claim 1 or 2, **characterized in that** the cleaning device (6) comprises at least one cleaning brush (7).

4. Intralogistics system according to Claim 3, **characterized in that** the cleaning brush (7) can be extended out of the cleaning station (3).

5. Intralogistics system according to any of Claims 1 to 4, **characterized in that** the cleaning device (6) of the cleaning station (3) comprises at least one cleaning nozzle (8) with which a liquid or gaseous medium can be sprayed onto the sensor (5) of the vehicle (1).

6. Intralogistics system according to Claim 5, **characterized in that** the cleaning nozzle (8) can be extended out of the cleaning station (3).

7. Intralogistics system according to Claim 5 or 6, **characterized in that** the cleaning nozzle (8) is pivotable and/or rotatable.

8. Intralogistics system according to any of Claims 1 to 7, **characterized in that** the cleaning device (6) of the cleaning station (3) comprises cleaning cloths and/or cleaning sponges and/or cleaning rubber lips to be moved in translation.

9. Intralogistics system according to any of Claims 1 to 8, **characterized in that** the cleaning device (6) of the cleaning station (3) comprises at least one highfrequency vibration generator.

10. Intralogistics system according to Claim 9, **characterized in that** the vibration generator has a vibration plate (9) onto which the vehicle (1) can be driven.

11. Intralogistics system according to any of Claims 1 to 10, **characterized in that** the cleaning station (3) has a calibration device which is designed for the automated calibration of the sensor (5) of the vehicle (1).

12. Method for controlling an intralogistics system according to any of Claims 1 to 11, **characterized in that** the sensor (5) of the vehicle (1) is monitored for contaminants in the sensor field of view and, if a specified degree of contamination is exceeded, an automated cleaning process is initiated.

13. Method according to Claim 12, **characterized in that** the sensor signals are evaluated for monitoring the contaminants in the sensor (5) and the situation of the specified degree of contamination being exceeded is established by means of a reduction in the signal strength below a specified quality level.

## Revendications

1. Système intralogistique dans lequel des flux de matériaux et de marchandises logistiques sont gérés à l'intérieur d'un site d'exploitation, comportant au moins un véhicule autonome et/ou automatisé (1) pouvant se déplacer de manière autonome dans un environnement d'exploitation, pourvu d'au moins un capteur (5) pour la perception et la reconnaissance de l'environnement, en particulier pour la surveillance de l'environnement, le système intralogistique comprenant au moins une station de nettoyage automatisée (3), séparée du véhicule (1), qui dispose d'au moins un dispositif de nettoyage (6) conçu pour un nettoyage automatisé du capteur (5) du véhicule (1), **caractérisé en ce que** la station de nettoyage (3) dispose d'au moins une unité de nettoyage mobile pouvant se déplacer de manière autonome, qui peut s'approcher de manière autonome du véhicule (1), l'unité de nettoyage mobile étant conçue sous forme de véhicule de nettoyage autonome ou automatisé.

2. Système intralogistique selon la revendication 1, **caractérisé en ce que** le véhicule (1) dispose d'un dispositif de surveillance qui est conçu pour la surveillance des salissures dans le champ de vision du capteur (5) du véhicule (1), le dispositif de surveillance comprenant un dispositif de commande électronique qui est conçu pour déclencher un processus de nettoyage automatisé du capteur (5) en cas de dépassement d'un degré de salissure prédéfini.

3. Système intralogistique selon la revendication 1 ou 2, **caractérisé en ce que** le dispositif de nettoyage (6) comprend au moins une brosse de nettoyage (7).

4. Système intralogistique selon la revendication 3, **caractérisé en ce que** la brosse de nettoyage (7) peut être déployée depuis la station de nettoyage (3).

5. Système intralogistique selon l'une des revendications 1 à 4, **caractérisé en ce que** le dispositif de nettoyage (6) de la station de nettoyage (3) comprend au moins une buse de nettoyage (8) au moyen de laquelle un milieu liquide ou gazeux peut être pulvérisé sur le capteur (5) du véhicule (1).

6. Système intralogistique selon la revendication 5, **caractérisé en ce que** la buse de nettoyage (8) peut être déployée depuis la station de nettoyage (3).

7. Système intralogistique selon la revendication 5 ou 6, **caractérisé en ce que** la buse de nettoyage (8) est pivotante et/ou rotative.

8. Système intralogistique selon l'une des revendications 1 à 7, **caractérisé en ce que** le dispositif de nettoyage (6) de la station de nettoyage (3) comprend des chiffons de nettoyage et/ou des éponges de nettoyage et/ou des lames de caoutchouc de nettoyage se déplaçant en translation.

9. Système intralogistique selon l'une des revendications 1 à 8, **caractérisé en ce que** le dispositif de nettoyage (6) de la station de nettoyage (3) comprend au moins un générateur de vibrations à haute fréquence.

10. Système intralogistique selon la revendication 9, **caractérisé en ce que** le générateur de vibrations dispose d'une plaque vibrante (9) sur laquelle le véhicule (1) peut circuler.

11. Système intralogistique selon l'une des revendications 1 à 10, **caractérisé en ce que** la station de nettoyage (3) dispose d'un dispositif d'étalonnage qui est conçu pour l'étalonnage automatisé du capteur (5) du véhicule (1).

12. Procédé de commande d'un système intralogistique selon l'une des revendications 1 à 11, **caractérisé en ce que** le capteur (5) du véhicule (1) est surveillé quant aux salissures dans le champ de vision du capteur et **en ce qu'**en cas de dépassement d'un degré de salissure prédéfini, un processus de nettoyage automatisé est déclenché.

13. Procédé selon la revendication 12, **caractérisé en ce que**, pour la surveillance des salissures du capteur (5), les signaux de capteur sont évalués et le dépassement du degré de salissure prédéfini est détecté par une diminution de l'intensité du signal en dessous d'un niveau de qualité prédéfini.
